# EUROPÄISCHE PATENTANMELDUNG

(11) **EP 0 645 913 A2**
(43) Veröffentlichungstag der Anmeldung: **29.03.1995**
(21) Anmeldenummer: 94114144.2
(22) Anmeldetag: 08.09.1994
(51) Int. Cl.: H04L 12/42, H04Q 11/04

(54) **Verfahren und Schaltungsanordnung zum Übertragen von ATM-Zellen über virtuelle Pfade**

(30) Priorität: 27.09.1993 DE 4332824
(71) Anmelder: SIEMENS AKTIENGESELLSCHAFT, D-80333 München (DE)
(72) Erfinder: Ziemann, Klaus, Dipl-Phys., D-82110 Germering (DE); Schaefer, Franz-Josef, Dipl.-Ing., D-85521 Ottobrunn (DE)

(57) **Zusammenfassung**

Das ATM-Kommunikationssystem (ATMK) weist Kommunikationseinrichtungen (K1, K2, K3) auf, welche in einem aus zwei gegenläufig betriebenen Ringleitungen (RING0, RING1) gebildeten Ringleitungsssystem (RS) angeordnet sind. Über die Kommunikationseinrichtungen sind dabei Ringschleifen einlegbar, um im Bedarfsfalle bei der Übertragung von Nachrichtenzellen von einem aktiven Pafad auf einen Ersatzpfad überwechseln zu können. Die Nachrichtenzellen erhalten in der jeweiligen Kommunikationseinrichtung jeweils einen internen Zellenkopf vorangestellt, in welchem u. a. eine pfadindividuelle Folgenummer enthalten ist. Darüber hinaus ist in der jeweiligen Kommunikationseinrichtung pfadindividuell die als nächste erwartete bzw. die zuletzt aufgetretene Folgenummer festgehalten. Bei Einlegen bzw. Aufheben einer Ringschleife wird anhand der Folgenummer der nächsten eintreffenden Nachrichtenzelle des jeweiligen Pfades die in Frage kommende festgehaltene Folgenummer unter Weiterleiten der Nachrichtenzelle aktualisiert. Nachfolgende Nachrichtenzellen desselben Pfades werden lediglich dann weitergeleitet, wenn die in diesen jeweils enthaltene Folgenummer der festgehaltenen Folgenummer entspricht.

## Beschreibung

Die Erfindung betrifft ein Verfahren und eine Schaltungsanordnung zum Übertragen von Nachrichtenzellen über virtuelle Pfade eines ATM-Kommunikationssystems gemäß Oberbegriff des Patentanspruches 1 bzw. des Patentanspruches 7. Ein derartiges Verfahren und eine derartige Schaltungsanordnung sind bereits durch die europäische Patentanmeldung 93 110 320.4 vorgeschlagen worden. Dabei ist in dieser europäischen Patentanmeldung lediglich ausgeführt, daß zu jedem virtuellen Pfad ein Ersatzpfad eingerichtet ist, der in entgegengesetzter Richtung verläuft und bei Ausfall des regulären virtuellen Pfades benutzt wird. Es wird jedoch nicht darauf eingegangen, wie eine derartige Umschaltung durchgeführt werden kann.

Es ist nun Aufgabe der vorliegenden Erfindung, einen Weg zu zeigen, wie ein Verfahren und eine Schaltungsanordnung der genannten Art ausgebildet werden können, um mit einem geringen Steuerungsaufwand bzw. schaltungstechnischen Aufwand eine Umschaltung von einem aktiven Pfad auf einen Ersatzpfad durchführen zu können.

Gelöst wird diese Aufgabe bei einem Verfahren der eingangs genannten Art durch die im Patentanspruch 1 angegebenen Verfahrensmerkmale. Der Vorteil der Erfindung besteht dabei darin, daß bei einem Einlegen bzw. Auflösen einer Ringschleife durch die erste danach auftretende Nachrichtenzelle des von dieser Ringschleife betroffenen virtuellen Pfades die in der jeweiligen Kommunikationseinrichtung festgehaltene Folgenummer auf die in der betreffenden Nachrichtenzelle enthaltene Folgenummer synchronisiert wird. Auf diese Weise ist sichergestellt, daß die auf diese erste Nachrichtenzelle folgenden Nachrichtenzellen des jeweiligen virtuellen Pfades ohne Zellenverlust weitergeleitet werden können.

Ein besonders geringer Steuerungsaufwand für die Übertragung von Nachrichtenzellen innerhalb des Ringleitungssystems wird durch Anwendung der in den Patentansprüchen 2 bis 6 angegebenen Ausgestaltungen erreicht.

Die vorstehend aufgezeigte Aufgabe wird bei einer Schaltungsanordnung der eingangs genannten Art durch die im Patentanspruch 7 angegebenen technischen Merkmale gelöst. Der Vorteil dieser Schaltungsanordnung besteht dabei darin, daß mit einem relativ geringen schaltungstechnischen Aufwand eine verlustfreie Übertragung von Nachrichtenzellen innerhalb des Ringleitungssystems bei Einlegen bzw. Auflösen von Ringschleifen erreicht werden kann.

Im folgenden wird die vorliegende Erfindung anhand von Zeichnungen beispielsweise näher erläutert.
Figur 1 zeigt in einem Blockschaltbild ein aus einem Ringleitungssystems gebildetes ATM-Kommunikationssystem, bei welchen die Erfindung angewandt ist,
Figur 2 zeigt in einem Blockschaltbild eine der in Figur 1 lediglich schematisch dargestellten Kommunikationseinrichtungen,
Figur 3 zeigt in einem Blockschaltbild eine der in Figur 2 schematisch dargestellten Auswerteeinrichtungen und
Figur 4 zeigt ein Flußdiagramm, auf welches im folgenden näher eingegangen wird.

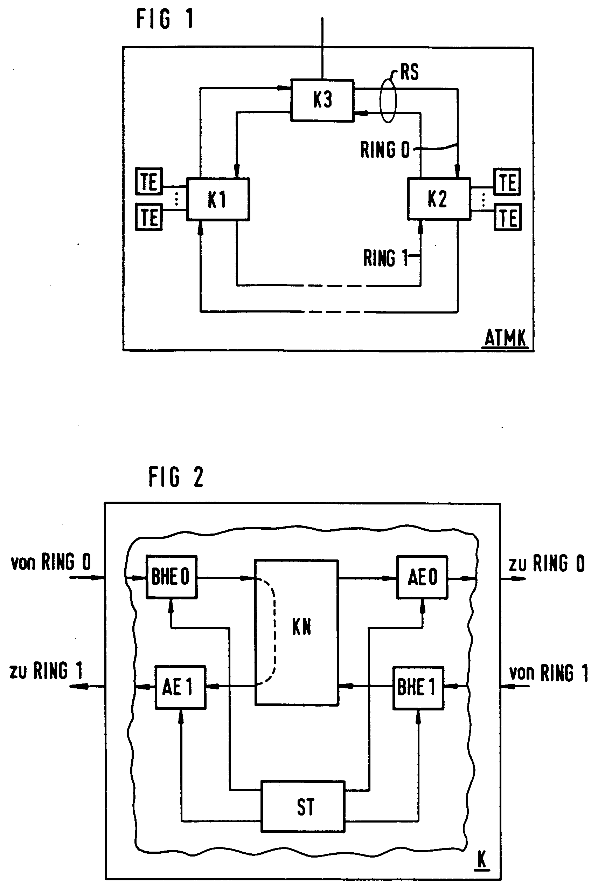

In Figur 1 ist ein nach einem asynchronen Übertragungsprinzip ("Asynchronous Transfer Mode") arbeitendes ATM-Kommunikationssystem ATMK schematisch dargestellt, welches eine Mehrzahl von in einem Ringleitungssystem RS angeordneten Kommunikationseinrichtungen aufweist. Von diesen sind in Figur 2 lediglich drei mit K1, K2 und K3 bezeichnete Kommunikationseinrichtungen dargestellt. Bei den Kommunikationseinrichtungen K1 und K2 möge es sich dabei beispielsweise um Konzentratoren handeln, an welche jeweils eine Mehrzahl von Teilnehmereinrichtungen TE bzw. eine Mehrzahl von mit Teilnehmeranschlußleitungen verbundenen Einrichtungen angeschlossen ist. Bei der Kommunikationseinrichtung K3 möge es sich dagegen beispielsweise um eine ATM-Vermittlungseinrichtung handeln, über welche das in Figur 1 dargestellte ATM-Kommunikationssystem ATMK beispielsweise mit weiteren in Figur 1 nicht dargestellten Kommunikationssystemen bzw. Kommunikationseinrichtungen verbunden ist.

Innerhalb des Ringleitungssystems RS, welches aus zwei gegenläufig betriebenen Ringleitungen RING0 und RING1 gebildet ist und durch die Kommunikationseinrichtungen K1, K2 und K3 in Ringabschnitte unterteilt ist, sind zwischen den Kommunikationseinrichtungen virtuelle Pfade zumindest semipermanent eingerichtet, über welche jeweils eine Mehrzahl von virtuellen Verbindungen verlaufen kann. Darüber hinaus ist zu jedem dieser aktiven Pfade ein virtueller Ersatzpfad eingerichtet, der in der entgegengesetzten Richtung verläuft und bei Ausfall des aktiven Pfades für die Übertragung von Nachrichtenzellen benutzt wird. Der Übergang von einem aktiven Pfad auf den zugehörigen Ersatzpfad erfolgt dabei durch eine von einer der Kommunikationseinrichtungen eingelegte Ringschleife, durch welche die in Figur 1 dargestellte äußere Ringleitung RING0 mit der inneren Ringleitung RING1 verbunden wird. Im übrigen kann je nach der Ausfallsituation innerhalb des Ringleitungssystems RS durch mehrere Kommunikationseinrichtungen jeweils eine Ringschleife eingelegt werden.

Die innerhalb des Ringleitungssystems RS übertragenen Nachrichtenzellen der einzelnen virtuellen Pfade weisen nach dem ATM-Übertragungsprinzip jeweils einen externen Zellenkopf mit einer den jeweiligen virtuellen Pfad bezeichnenden Pfadkennung auf. Für die Übertragung innerhalb der Kommunikationseinrichtungen K1, K2 und K3 wird diesen zusätzlich ein interner Zellenkopf vorangestellt, der zusammen mit dem externen Zellenkopf einen erweiterten Zellenkopf bildet. In diesem ist u. a. eine sich von Nachrichtenzelle zu Nachrichtenzelle des jeweiligen virtuellen Pfades fortlaufend veränderte Folgenummer enthalten. Die Folgenummern werden durch die jeweilige Kommunkationseinrichtung bereitgestellt. Außerdem wird in den Kommunikationseinrichtungen jeweils die unter der jeweiligen Pfadkennung in einer Nachrichtenzelle als nächste erwartete Folgenummer festgehalten. Alternativ dazu kann jedoch auch die in einer Nachrichtenzelle zuletzt aufgetretene Folgenummer festgehalten sein. Dabei wird von der jeweiligen Kommunikationseinrichtung eine Nachrichtenzelle lediglich dann weitergeleitet, wenn die in der jeweiligen Nachrichtenzelle enthaltene Folgenummer der unter der zugehörigen Pfadkennung festgehaltenen bzw. der um 1 erhöhten festgehaltenen Folgenummer entspricht.

Wird nun durch eine Kommunikationseinrichtung eine Ringschleife eingelegt bzw. wieder aufgehoben, so wird von dieser die erste unter der jeweiligen Pfadkennung eintreffende Nachrichtenzelle ohne die zuvor genannte Überprüfung weitergeleitet und dabei nach Maßgabe der in der betreffenden Nachrichtenzelle enthaltenen Folgenummer die unter der in Frage kommenden Pfadkennung festgehaltene Folgenummer aktualisiert, d. h. die Folgenummer wird auf die gerade empfangene Folgenummer synchronisiert. Der betreffenden ersten Nachrichtenzelle nachfolgende Nachrichtenzellen des jeweiligen virtuellen Pfades werden dann lediglich weitergeleitet, wenn die in der jeweiligen Nachrichtenzelle enthaltene Folgenummer der unter der Pfadkennung festgehaltenen bzw. der um 1 erhöhten festgehaltenen Folgenummer entspricht.

In Figur 2 ist eine der in Figur 1 dargestellten Kommunikationseinrichtungen K1, K2 und K3 detaillierter dargestellt. Diese ist in Figur 2 mit K bezeichnet. Danach ist die Kommunikationseinrichtung eingangsseitig über eine Behandlungseinrichtung BHE0 an die Ringleitung RING0 angeschlossen. Von dieser wird bei Eintreffen einer Nachrichtenzelle anhand der in dem zugehörigen externen Zellenkopf enthaltenen Pfadkennung ein unter der betreffenden Pfadkennung gespeicherter interner Zellenkopf bereitgestellt. Dieser interne Zellenkopf enthält dabei die zuvor genannte Folgenummer und bildet zusammen mit dem externen Zellenkopf den oben erwähnten erweiterten Zellenkopf. Dieser interne Zellenkopf wird der gerade aufgenommenen Nachrichtenzelle vorangestellt, um diese über ein der Behandlungseinrichtung BHE0 nachgeschaltetes Koppelnetzwerk KN zu übertragen. Ausgangsseitig steht dieses über eine Auswerteeinrichtung AE0 mit der Ringleitung RING0 in Verbindung. Über diese werden im Normalfall, d.h. bei einer nichteingelegten Ringschleife, die der Kommunikationseinrichtung K über die Ringleitung RING0 zugeführten Nachrichtenzellen weitergeleitet. Dabei erfolgt diese Weiterleitung nach Maßgabe der zuvor bereits erwähnten und im folgenden noch näher erläuterten Auswertung der Folgenummern.

In entsprechender Weise ist das Koppelnetzwerk KN eingangsseitig über eine Behandlungseinrichtung BHE1 und eine Auswerteeinrichtung AE1 an die Ringleitung RING1 angeschlossen, welche gegenläufig zu der Ringleitung RING0 betrieben ist.

Gesteuert wird das Koppelnetzwerk KN sowie die zuvor genannten Behandlungseinrichtungen und Auswerteeinrichtungen durch eine zentrale Steuereinrichtung ST, unter deren Steuerung auch eine Ringschleife einlegbar bzw. auflösbar ist. Eine solche Ringschleife ist in Fig.2 durch eine unterbrochene Kurve angedeutet.

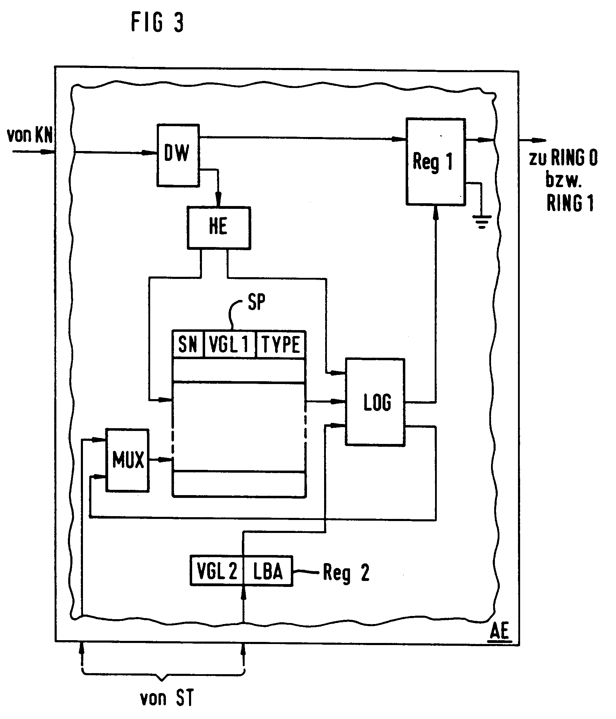

In Figur 3 ist ausschnittweise der Aufbau einer der erwähnten Auswerteeinrichtungen dargestellt. Diese mit AE bezeichnete Auswerteeinrichtung weist eingangsseitig eine Datenweiche DW auf, welche die von dem zugehörigen Koppelnetzwerk KN (Figur 2) her nacheinander abgegebenen Nachrichtenzellen aufnimmt und diese jeweils einschließlich des zugehörigen externen Zellenkopfes für eine Zwischenspeicherung einem Speicherregister Reg1 zugeführt. Zusätzlich wird durch diese Datenweiche der der jeweiligen Nachrichtenzelle vorangestellte erweiterte Zellenkopf zu einer Zellenkopf-Auswerteeinrichtung HE hin übertragen. Von dieser aus wird dann nach Maßgabe der in dem jeweiligen erweiterten Zellenkopf enthaltenen Pfadkennung ein Speicher SP angesteuert. Dieser Speicher weist eine der möglichen Anzahl der unterschiedlichen virtuellen Pfade und damit der unterschiedlichen Pfadkennungen entsprechende Anzahl von Speicherzellen auf, die durch die Pfadkennungen individuell ansteuerbar sind. In diesen Speicherzellen sind jeweils eine Folgenummer SN, welche der zuletzt empfangenen Folgenummer entspricht, ein erstes Vergleichsbit VGL1, welches beim Einrichten zunächst auf einen festgelegten logischen Pegel beispielsweise "0" gesetzt ist, sowie eine Pfadangabe TYPE gespeichert. Aus der Pfadangabe geht dabei hervor, ob der jeweilige, über die Auswerteeinrichtung verlaufende virtuelle Pfad einen aktiven Pfad oder einen Ersatzpfad darstellt. Beispielsweise kann ein aktiver Pfad durch TYPE = 0, ein Ersatzpfad dagegen durch TYPE = 1 gekennzeichnet sein. Die in den einzelnen Speicherzellen gespeicherten Informationen werden im übrigen von der in Figur 2 dargestellten zentralen Steuereinrichtung ST bei der Einrichtung des jeweiligen virtuellen Pfades eingetragen. Dafür steht diese zentrale Steuereinrichtung über einen Multiplexer MUX mit dem Speicher SP in Verbindung.

Bei der Ansteuerung einer Speicherzelle durch die Zellenkopf-Auswerteeinrichtung HE wird der Inhalt dieser Speicherzelle zu einer logischen Verknüpfungseinrichtung LOG hin übertragen. Als weitere Eingangssignale erhält diese die Folgenummer, die in dem durch die Zellenkopf-Auswerteeinrichtung HE gerade ausgewerteten erweiterten Zellenkopf enthalten ist, sowie den Registerinhalt eines Registers Reg2 zugeführt. In diesem Register ist dabei ein pfadunabhängiges zweites Vergleichsbit VGL2 sowie eine Schleifeninformation LBA enthalten. Das Vergleichsbit VGL2 ist dabei zunächst durch die in Figur 2 dargestellte zentrale Steuereinrichtung ST auf den gleichen logischen Pegel (logischer Pegel "0") wie das Vergleichsbit VGL1 gesetzt. Der logische Pegel dieses Vergleichsbits VGL2 wird dann unter der Steuerung der Steuereinrichtung ST mit jedem Einlegen bzw. Aufheben einer Ringschleife invertiert. Durch die Schleifeninformation LBA ist angegeben, ob ein Einlegen einer Ringschleife stattgefunden hat oder nicht. Dabei kann beispielsweise das Einlegen einer Ringschleife durch LBA = 1, das Auflösen einer Ringschleife dagegen durch LBA = 0 gekennzeichnet sein. Bei der Initialisierung wird die Schleifeninformation LBA durch die zentrale Steuereinrichtung ST auf den Wert "0" gesetzt. Dieser Wert wird dann beim Einlegen einer Ringschleife von der Steuereinrichtung ST her invertiert. Bei einem Auflösen dieser Ringschleife erfolgt dann wieder ein Rücksetzen auf den Anfangswert "0".

Die logische Verknüpfungseinrichtung LOG steht über einen Steuerausgang mit einem Steuereingang des zuvor genannten Speicherregisters Reg1 in Verbindung. Dabei wird über diese Verbindung durch von der logischen Verknüpfungseinrichtung abgegebene Steuersignale festgelegt, ob eine gerade in dem Speicherregister gespeicherte Nachrichtenzellen weiterzuleiten oder zu verwerfen ist. Über einen Datenausgang ist dagegen die logische Verknüpfungseinrichtung LOG an den zuvor genannten Multiplexer MUX angeschlossen. Diese Verbindung wird benutzt, um die in einer gerade angesteuerten Speicherzelle des Speichers SP gespeicherte Folgenummer durch eine aktualisierte Folgenummer zu überschreiben.

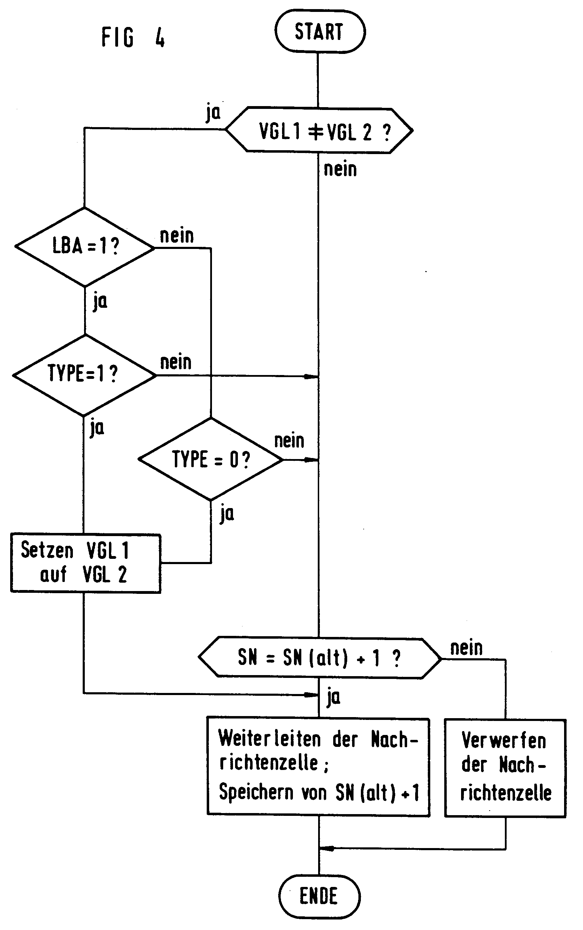

Im folgenden wird die von der logischen Verknüpfungseinrichtung LOG vorgenommene Verknüpfung der zuvor erwähnten Eingangssignale anhand des in Figur 4 dargestellten Flußdiagrammes erläutert. Dabei wird davon ausgegangen, daß über beide in Figur 1 dargestellte Ringleitungen RING0 und RING1 aktive Pfade eingerichtet sind. Zusätzlich sind den aktiven Pfaden einer Ringleitung Ersatzpfade auf der anderen Ringleitung zugeordnet. Dementsprechend ist beispielsweise für die aktiven Pfade der Ringleitung RING0 jeweils in der in Figur 2 dargestellten Auswerteeinrichtung AE0 der Kommunikationseinrichtung K ein oben genannter Wert TYPE = 0 festgehalten. Der dem jeweiligen aktiven Pfad zugeordnete Ersatzpfad ist dagegen in der der Kommunikationseinrichtung K zugehörigen Auswerteeinrichtung AE1 mit TYPE = 1 markiert.

Durch die der jeweiligen Auswerteeinrichtung (AE0, AE1) zugehörige logische Verknüpfungseinrichtung LOG ( Figur 3) werden zunächst die oben genannten Vergleichsbits VGL1 und VGL2 miteinander verglichen. Bei einer Identität dieser beiden Vergleichsbits wird dann überprüft, ob die in einer gerade empfangenen Nachrichtenzelle enthaltene Folgenummer der um 1 erhöhten, von dem Speicher SP her zugeführten Folgenummer entspricht. Ist dies der Fall, so wird von der logischen Verknüpfungseinrichtung ein Steuersignal über den zuvor genannten Steuerausgang abgegeben, auf dessen Auftreten hin die gerade in dem in Figur 3 dargestellten Speicherregister Reg1 zwischengespeicherte Nachrichtenzelle über die in Frage kommende Ringleitung (RING0, RING1) weitergeleitet wird. Darüber hinaus wird an dem genannten Datenausgang der logischen Verknüpfungseinrichtung eine Folgenummer (SN(ALT)+1) bereitgestellt, durch welche die in der gerade angesteuerten Speicherzelle des Speichers SP gespeicherte Folgenummer (SN(alt)) überschrieben wird.

Ergibt dagegen der zuvor genannte Vergleich, daß die miteinander verglichenen Folgenummern nicht identisch sind, so wird die in dem Speicherregister Reg1 gerade zwischengespeicherte Nachrichtenzelle verworfen. Dabei bleibt die bisher in der gerade angesteuerten Speicherzelle des Speichers SP gespeicherte Folgenummer unverändert.

Tritt nun der Fall ein, daß beispielsweise von der in Figur 2 dargestellten Kommunikationseinrichtung K eine Ringschleife zwischen der Behandlungseinrichtung BHE0 und der Auswerteeinrichtung AE1 über das Koppelnetzwerk KN eingelegt wird, so wird unter der Steuerung der zentralen Steuereinrichtung ST das zuvor genannte, in dem Register Reg2 der Auswerteeinrichtung AE1 gespeicherte Vergleichsbits VGL2 invertiert. Außerdem wird die in diesem Register enthaltene Schleifeninformation LBA auf den Wert "1" gesetzt. Da somit bei dem oben angegeben Vergleich die beiden Vergleichsbits VGL1 und VGL2 voneinander abweichen, wird aufgrund der Schleifeninformation LBA = 1 überprüft, ob die gerade vorliegende Nachrichtenzelle zu einem Ersatzpfad gehört, d. h. ob der Wert für den virtuellen Pfad auf TYPE = 1 gesetzt ist. Ist dies der Fall, so wird die gerade vorliegende Nachrichtenzelle als erste Nachrichtenzelle nach dem Einlegen einer Ringschleifie gewertet und ohne Folgenummernvergleich, aber unter Aktualisieren der in der gerade angesteuerten Speicherzelle des Speichers SP gespeicherten Folgenummer weitergeleitet. Außerdem wird durch die logische Verknüpfungseinrichtung LOG der logische Pegel des Vergleichsbits VGL1 auf den logischen Pegel des Vergleichsbits VGL2 gesetzt. Mit diesem logischen Pegel wird dann der in der gerade angesteuerten Speicherzelle des Speichers SP gespeicherte logische Pegel überschrieben. Da somit für auf die erste Nachrichtenzelle folgende Nachrichtenzellen desselben Pfades die beiden Vergleichsbits VGL1 und VGL2 wieder identisch sind, werden diese Nachrichtenzellen in der oben angegeben Weise einem Folgenummernvergleich unterzogen. Je nach Vergleichsergebnis werden dann diese Nachrichtenzellen weitergeleitet oder verworfen.

Bei dem angenommenen Beispiel sind die über die Auswerteeinrichtung AE1 verlaufenden aktiven Pfade mit TYPE = 0 markiert, so daß die zu diesen aktiven Pfaden gehörenden Nachrichtenzellen in der angegebenen Weise einem Folgenummernvergleich unterzogen werden. Je nach dem Vergleichsergebnis erfolgt dann eine Weiterleitung oder Verwerfung dieser Nachrichtenzellen mit den angegebenen Folgeaktivitäten.

Wird nun die Ringschleife durch die zentrale Steuereinrichtung ST wieder aufgehoben, so wird in der Auswerteeinrichtung AE0 das in dem zugehörigen Register Reg2 gespeicherte Vergleichsbit VGL2 invertiert. Die in den Speicherzellen des zugehörigen Speichers SP gespeicherten Vergleichsbits VGL1 weisen dagegen jeweils einen logischen Pegel auf, der dem logischen Pegel des Vergleichsbits VGL2 vor der Invertierung entspricht. Damit ergibt der Bitvergleich in der Auswerteeinrichtung AE0 bei Auftreten einer Nachrichtenzelle, daß das dafür in Frage kommende Vergleichsbit VGL1 von dem Vergleichsbit VGL2 abweicht. Da die Schleifeninformation als Zeichen einer nicht vorhandenen bzw. aufgelösten Ringschleife auf den Wert LBA = 0 gesetzt ist, wird überprüft, ob die gerade vorliegende Nachrichtenzelle einem aktiven Pfad zugehörig ist. Ist dies der Fall, so wird die betreffende Nachrichtenzelle als erste Nachrichtenzelle des jeweiligen aktiven Pfades nach der Auflösung der Ringschleife gewertet und ohne Folgenummernvergleich, jedoch unter Aktualisieren der gespeicherten Folgenummer weitergeleitet. Dabei wird jedoch der logische Pegel des Vergleichsbits VGL1 auf den logischen Pegel des Vergleichsbits VGL2 gesetzt und dieser Pegel in die gerade angesteuerte Speicherzelle des Speichers SP übernommen. Da damit für auf diese erste Nachrichtenzelle folgende Nachrichtenzellen desselben aktiven Pfades jeweils das Vergleichsbit VGL1 und das Vergleichsbit VGL2 identisch sind, werden diese Nachrichtenzellen dann in der oben angegebenen Weise in der Auswerteeinrichtung AE0 einem Folgenummernvergleich unterzogen und nach Maßgabe des Vergleichsergebnisses entweder unter Aktualisieren der in dem Speicher SP gespeicherten Folgenummer weitergeleitet oder ohne eine solche Aktualisierung verworfen. In gleicher Weise werden in der Auswerteeinrichtung AE1 ggf. eintreffende Nachrichtenzellen von Ersatzpfaden einem Folgenummernvergleich unterzogen. Derartige Nachrichtenzellen können in der Auswerteeinrichtung AE1 auftreten, wenn durch eine weitere Kommunikationseinrichtung des Ringleitungssystems eine Ringschleife eingelegt wurde.

Abschließend sei noch darauf hingewiesen, daß zwar vorstehend davon ausgegangen wurde, daß für den Folgenummernvergleich in der jeweiligen Speicherzelle des Speichers SP die zuletzt in einer Nachrichtenzelle aufgetretene Folgenummer gespeichert ist. Abweichend davon kann jedoch die als nächste erwartete Folgenummer eingetragen sein, die nach einem Vergleich entsprechend geändert wird.

Darüber hinaus sei auch noch darauf hingewiesen, daß die Abfrage der Schleifeninformation LBA und die Abfrage, ob ein aktiver Pfad oder ein Ersatzpfad vorliegt, entfallen können, falls lediglich über eine der Ringleitungen RING0 und RING1 aktive Pfade geführt sind und die verbleibende Ringleitung lediglich für Ersatzpfade zur Verfügung steht. In diesem Fall wird bei Ungleichheit der Vergleichsbits VGL1 undVGL2 die jeweilige Nachrichtenzelle als erste Nachrichtenzelle nach dem Einlegen bzw. Aufheben einer Ringschleife gewertet und ohne die gerade genannten Abfragen in der oben angegebenen Weise behandelt.

## Patentansprüche

1. Verfahren zum Übertragen von Nachrichtenzellen über virtuelle Pfade, die zwischen Kommunikationseinrichtungen (K1, K2, K3) eines nach einem asynchronen Transfermodus arbeitenden ATM-Kommunikationssystems (ATMK) eingerichtet sind, wobei die Kommunikationseinrichtungen in einem aus zwei gegenläufig betriebenen Ringleitungen (RING0, RING1) gebildeten Ringleitungssystem (RS) angeordnet sind und dieses in Ringabschnitte unterteilen, wobei für den jeweiligen virtuellen Pfad ein aktiver Pfad über eine der Ringleitungen (z. B. RING0) und ein Ersatzpfad über die verbleibende Ringleitung (RING1) eingerichtet wird und wobei durch die jeweilige Kommunikationseinrichtung eine Ringschleife zwischen dem jeweiligen aktiven Pfad und dem diesen zugeordneten Ersatzpfad einlegbar ist,
**dadurch gekennzeichnet**,
daß innerhalb der jeweiligen Kommunikationseinrichtung (K1, K2, K3) den über den jeweiligen virtuellen Pfad zu übertragenden Nachrichtenzellen jeweils ein erweiterter Zellenkopf vorangestellt ist, in welchem eine den jeweiligen virtuellen Pfad bezeichnende Pfadkennung sowie eine sich von Nachrichtenzelle zu Nachrichtenzelle des jeweiligen virtuellen Pfades fortlaufend verändernde Folgenummer (SN) enthalten sind,
daß in den Kommunikationseinrichtungen jeweils die unter der jeweiligen Pfadkennung als nächste erwartete Folgenummer bzw. die zuletzt aufgetretene Folgenummer festgehalten wird,
daß auf das Einlegen bzw. Aufheben einer Ringschleife durch eine der Kommunikationseinrichtungen hin von dieser die erste daraufhin unter der jeweiligen Pfadkennung eintreffende Nachrichtenzelle unter Aktualisieren der festgehaltenen Folgenummer nach Maßgabe der in der betreffenden ersten Nachrichtenzelle enthaltenen Folgenummer weitergeleitet wird
und daß der betreffenden ersten Nachrichtenzelle unter der gleichen Pfadkennung nachfolgende Nachrichtenzellen jeweils lediglich dann durch die jeweilige Kommunikationseinrichtung weitergeleitet werden, wenn die in der jeweiligen Nachrichtenzelle enthaltene Folgenummer der unter der Pfadkennung festgehaltenen bzw. der um 1 erhöht festgehaltenen Folgenummer entspricht.

2. Verfahren nach Anspruch 1,
**dadurch gekennzeichnet**,
daß in der jeweiligen Kommunikationseinrichtung (K1, K2, K3) einerseits für die einzelnen virtuellen Pfade neben der genannten Folgenummer ein erstes Vergleichsbit (VGL1) und andererseits ein pfadunabhängiges zweites Vergleichsbit (VGL2) festgehalten sind,
daß die ersten Vergleichsbits (VBGL1) und das zweite Vergleichsbit (VGL2) zunächst einheitlich auf einen festgelegten logischen Pegel gesetzt werden, daß mit jedem Einlegen bzw. Aufheben einer Ringschleife durch die jeweilige Kommunikationseinrichtung das zweite Vergleichsbit (VGL2) invertiert wird,
daß in der jeweiligen Kommunikationseinrichtung bei Auftreten einer Nachrichtenzelle nach Maßgabe der in dem zugehörigen Zellenkopf enthaltenen Pfadkennung das in Frage kommende erste Vergleichsbit (VGL1) ausgewählt und mit dem zweiten Vergleichsbit verglichen wird,
daß bei einer Nichtidentität der miteinander verglichenen Vergleichsbits die betreffende Nachrichtenzelle als erste Nachrichtenzelle des jeweiligen virtuellen Pfades gewertet und unter Aktualisieren der in der jeweiligen Kommunikationseinrichtung festgehaltenen Folgenummer und unter Setzen des logischen Pegels des ersten Vergleichsbits (VGL1) auf den logischen Pegel des zweiten Vergleichsbits (VGL2) weitergeleitet wird
und daß bei einer Identität der miteinander verglichenen Vergleichsbits die betreffende Nachrichtenzelle lediglich dann unter Aktualisieren der in der jeweiligen Kommunikationseinrichtung festgehaltenen Folgenummer weitergeleitet wird, wenn die in der betreffenden Nachrichtenzelle enthaltene Folgenummer der unter der Pfadkennung zunächst festgehaltenen bzw. der um 1 erhöhten festgehaltenen Folgenummer entspricht.

3. Verfahren nach Anspruch 2,
**dadurch gekennzeichnet**,
daß die erweiterten Zellenköpfe für die einzelnen aktiven Pfade und Ersatzpfade am jeweiligen Eingang jeder der Kommunikationseinrichtungen (K1, K2, K3) bereitgestellt werden und daß am jeweiligen Ausgang jeder der Kommunikationseinrichtungen einerseits die pfadindividuellen Folgenummern (SN) und ersten Vergleichsbits (VGL1) sowie das pfadunabhängige zweite Vergleichsbit (VGL2) festgehalten und andererseits die Vergleiche der Vergleichsbits und Folgenummern durchgeführt werden.

4. Verfahren nach Anspruch 3,
**dadurch gekennzeichnet**,
daß für den Fall, daß über beide Ringleitungen (RING0, RING1) des Ringleitungssystems (RS) aktive Pfade geführt werden, an dem jeweiligen Ausgang jeder der Kommunikationseinrichtungen (K1,K2, K3) zusätzlich einerseits für jeden der virtuellen Pfade eine Markierung (TYPE), aus welcher hervorgeht, ob der jeweilige virtuelle Pfad als aktiver Pfad oder als Ersatzpfad benutzt wird, und andererseits eine pfadunabhängige Schleifeninformation (LBA) zur Kennzeichnung einer eingelegten bzw. aufgehobenen Ringschleife festgehalten ist,
daß bei einer Nichtidentiät zweier miteinander verglichener Vergleichsbits (VGL1, VGL2) und einer durch die Schleifeninformation (LBA) markierten eingelegten Ringschleife die gerade vorliegende Nachrichtenzelle leldiglich dann als erste Nachrichtenzelle des jeweiligen virtuellen Pfades behandelt wird, wenn dieser durch seine Markierung (TYPE) als Ersatzpfad festgelegt ist
und daß bei einer Nichtidentität zweier miteinander verglichener Vergleichsbits und einer durch die Schleifeninformation (LBA) markierten aufgehobenen Ringschleife die gerade vorliegende Nachrichtenzelle lediglich dann als erste Nachrichtenzelle des jeweiligen virtuellen Pfades behandelt wird, wenn dieser durch seine Markierung (TYPE) als aktiver Pfad festgelegt ist.

5. Verfahren nach einem der Ansprüche 1 bis 4,
**dadurch gekennzeichnet**,
daß durch die jeweilige Kommunikationseinrichtung (K1, K2, K3) eine Ringschleife bei einer Nichtverfügbarkeit bzw. einer Wiederverfügbarkeit eines mit der jeweiligen Kommunikationseinrichtung verbundenen Ringabschnittes unter der Steuerung durch eine Steuereinrichtung (ST) eingelegt bzw. wieder aufgehoben wird.

6. Verfahren nach einem der Ansprüche 1 bis 4,
**dadurch gekennzeichnet**,
daß durch die jeweilige Kommunikationseinrichtung (K1, K2, K3) eine Ringschleife auf ein von einer Steuereinrichtung (ST) abgegebenes Steuersignal hin eingelegt bzw. wieder aufgehoben wird.

7. Schaltungsanordnung zum Übertragen von Nachrichtenzellen über virtuelle Pfade, die zwischen Kommunikationseinrichtungen (K1, K2, K3) eines nach einem asynchronen Transfermodus arbeitenden ATM-Kommunikationssystems (ATMK) eingerichtet sind, wobei die Kommunikationseinrichtungen in einem aus zwei gegenläufig betriebenen Ringleitungen (RING0, RING1) gebildeten Ringleitungssystem (RS) angeordnet sind und dieses in Ringabschnitte unterteilen, wobei für den jeweiligen virtuellen Pfad ein aktiver Pfad über eine der Ringleitungen (z. B. RING0) und ein Ersatzpfad über die verbleibende Ringleitung (RING1) eingerichtet wird und wobei durch die jeweilige Kommunikationseinrichtung eine Ringschleife zwischen dem jeweiligen aktiven Pfad und dem diesen zugeordneten Ersatzpfad einlegbar ist, zur Durchführung des Verfahrens nach Anspruch 1,
**dadurch gekennzeichnet**,
daß die Kommunikationseinrichtungen (K1, K2, K3) jeweils derart ausgebildet sind, daß innerhalb der jeweiligen Kommunikationseinrichtung (K1, K2, K3) den über den jeweiligen virtuellen Pfad zu übertragenden Nachrichtenzellen jeweils ein erweiterter Zellenkopf vorangestellt ist, in welchem eine den jeweiligen virtuellen Pfad bezeichnende Pfadkennung sowie eine sich von Nachrichtenzelle zu Nachrichtenzelle des jeweiligen virtuellen Pfades fortlaufend verändernde Folgenummer (SN) enthalten sind,
daß in den Kommunikationseinrichtungen jeweils die unter der jeweiligen Pfadkennung als nächste erwartete Folgenummer bzw. die zuletzt aufgetretene Folgenummer festgehalten ist,
daß auf das Einlegen bzw. Aufheben einer Ringschleife durch eine der Kommunikationseinrichtungen hin von dieser die erste daraufhin unter der jeweiligen Pfadkennung eintreffende Nachrichtenzelle unter Aktualisieren der festgehaltenen Folgenummer nach Maßgabe der in der betreffenden ersten Nachrichtenzelle enthaltenen Folgenummer weitergeleitet ist,
und daß der betreffenden ersten Nachrichtenzelle unter der gleichen Pfadkennung nachfolgende Nachrichtenzellen jeweils lediglich dann durch die jeweilige Kommunikationseinrichtung weitergeleitet sind, wenn die in der jeweiligen Nachrichtenzelle enthaltene Folgenummer der unter der Pfadkennung festgehaltenen bzw. der um 1 erhöht festgehaltenen Folgenummer entspricht.
